(19) Europäisches Patentamt

European Patent Office

Office européen des brevets

(11) **EP 4 685 722 A1**

(12) **EUROPEAN PATENT APPLICATION**

(43) Date of publication:
28.01.2026 Bulletin 2026/05

(21) Application number: 25191606.0

(22) Date of filing: 24.07.2025

(51) International Patent Classification (IPC):
$G06Q\ 30/0201^{(2023.01)}$    $G06Q\ 50/06^{(2024.01)}$

(52) Cooperative Patent Classification (CPC):
G06Q 30/0206; G06Q 50/06

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 25.07.2024 IN 202421056696

(71) Applicant: Tata Consultancy Services Limited
Maharashtra (IN)

(72) Inventors:
• BICHPURIYA, Yogesh Kumar
411057 Pune, Maharashtra (IN)
• LOKHANDE, Smita Sanjay
400093 Mumbai, Maharashtra (IN)
• SARANGAN, Venkatesh
600113 Chennai, Tamil Nadu (IN)
• KULKARNI, Ankur
400076 Mumbai, Maharashtra (IN)

(74) Representative: Goddar, Heinz J.
Boehmert & Boehmert
Anwaltspartnerschaft mbB
Pettenkoferstrasse 22
80336 München (DE)

(54) **NON-LINEAR SINGLE LEVEL OPTIMIZATION MODEL FOR ESTIMATING DISTRIBUTED ENERGY RESOURCES RESPONSES IN MULTI-AGGREGATORS MULTI-SUBSCRIBERS ENVIRONMENT**

(57) Embodiments of the present disclosure herein provide a method and system of a non-linear single level optimization model for estimating DER responses in MAMS environment. Existing methods do not have a framework for volume allocation optimization and price-volume optimization especially in multi-aggregator multi-subscriber systems. Moreover, the price-volume optimization methods in existing literature consider a system having multiple subscribers and single aggregator only and using these methods it is difficult to assess how multiple subscribers will behave with multiple aggregators. Further, in a multi-aggregator system, determining the prices offered by each for an amount of energy resource allocated by the subscribers is another challenge, since the prices offered are dependent on several factors such as day ahead market prices, market risks and the like. The disclosed non-linear single level optimization model enables to estimate equilibrium optimal values between an amount of energy resources allocated for each aggregator among the one or more aggregators and the amount of energy resource traded by each aggregator in one or more energy markets.

300

receiving a plurality of inputs from one or more aggregators comprising (i) a day ahead market price, (ii) a total available energy resource with each subscriber among one or more subscribers, (iii) one or more market risks, and (iv) a pricing strategy according to each aggregator — 302

obtaining by a non-linear single level optimization model an energy resource allocation for the one or more aggregators based on the plurality of inputs — 304

deriving by the non-linear optimization model a plurality of equilibrium optimal values between the energy resource allocation for each aggregator and an amount of energy resource traded by each aggregator in one or more energy markets — 306

estimating by the non-linear optimization model a plurality of distributed energy resources (DER) responses from the one or more subscribers based on the plurality of equilibrium optimal values — 308

**FIG. 3**

**Description**

CROSS-REFERENCE TO RELATED APPLICATIONS AND PRIORITY

The present application claims priority from Indian provisional patent application no. 202421056696, filed on July 25, 2024. The entire contents of the aforementioned application are incorporated herein by reference.

TECHNICAL FIELD

The disclosure herein generally relates to electrical distribution and sustainable energy systems, and, more particularly, to a non-linear single level optimization model for estimating distributed energy resources (DER) responses in multi-aggregators multi-subscribers (MAMS) environment.

BACKGROUND

In recent years, the need for aggregating Distributed Energy Resources (DERs) has gathered significant attention within electrical distribution systems driven by the objective of achieving sustainable energy systems. The aggregation of DERs is conducted by various entities including independent or utility-owned aggregators. Such aggregator's function are analogous to conventional brokers to accumulate energy resources from multiple small DERs or subscribers. Subsequently helping in trading the amount of aggregated energy resources in multiple energy markets providing ancillary services to one or more groups of transmission or distribution operators.

In a multi-aggregators multi-subscribers (MAMS) environment, a subscriber evaluates the offer prices provided by the one or more aggregators and allocates an amount of energy resources based on the prices offered by the one or more aggregators. The response of the subscriber is influenced by pricing strategies employed by the aggregators, with the objective of maximizing financial benefit. Upon receiving the pricing offers from the one or more aggregators, the subscriber assesses the potential revenue and allocates the energy resources to the aggregator(s) offering the most favorable terms. The allocation of energy resources by the subscriber is a function of the price competitiveness and the optimization of resource distribution to achieve maximum economic returns. The interaction between the pricing offers from the aggregators and the resource allocation decisions by the subscriber creates a competitive market environment, thereby driving efficiency and profitability for both the aggregators and the subscriber.

As the energy market evolves, it is anticipated that multiple aggregators would compete for the same pool of distributed energy resources (DER)s or subscribers. Consequently, the volume of aggregated energy resources and the associated flexibility offered by the subscribers directly influence the revenue or profit generated by the aggregators thereby highlighting the importance of efficient and accurate methods for estimating DERs responses. In the realm of DER management, existing techniques predominantly explore methods and systems aimed at optimizing DER or subscriber responses to achieve maximum profits either for aggregators or for subscribers only in multiple energy markets.

A few of the state-of-the-art techniques focus on advanced predictive modeling techniques that leverage historical data, machine learning algorithms, and artificial intelligence for accurate forecast of energy production and energy consumption. Such modeling techniques enable aggregators to predict the availability of energy resources with high precision thereby informing the aggregator's trading strategies and pricing models. But such systems and techniques fail to address a multi-aggregator multi-subscriber scenario, where a dynamic interaction between a group of aggregators and subscribers is predominant.

In existing techniques, dynamic pricing strategies are employed by aggregators to maximize their profits while engaging subscribers effectively. These dynamic pricing strategies often incorporate game-theoretic frameworks, such as Stackelberg games, where aggregators determine optimal pricing schemes so that subscribers are able to respond over these optimal pricing schemes. One of the existing techniques also details method for aggregators to adjust their pricing dynamically in response to market conditions and subscriber behavior, thereby optimizing resource allocation and enhancing profitability. A few prior arts related to these strategies highlight the importance of balancing supply and demand in real-time effectively, accounting for market volatility and subscriber preferences to achieve optimal outcomes.

Additionally, state of the art techniques encompasses a range of optimization algorithms designed to facilitate efficient energy trading in a wide variety of markets. Techniques such as an iterative Gauss-Seidel method are frequently employed to solve complex, non-linear optimization problems, ensuring optimal distribution of energy resources among aggregators and subscribers. These algorithms are crucial for enabling aggregators to participate in wholesale markets and provide ancillary services to grid operators, all while maximizing their revenue. Also, few of the existing techniques in this area often underscore the necessity of robust optimization frameworks that can handle the inherent uncertainties and fluctuations in energy markets, thus ensuring that aggregators can make informed trading decisions and achieve maximum profitability.

In a scenario where multiple aggregators compete to acquire a greater volume of energy resources from the DERs or subscribers, each aggregator seeks to offer a price to the DERs or the subscribers that maximizes the subscriber's profit. In this context, aggregators must design a portfolio strategy, akin to a fund manager, to extract maximum value from the aggregated energy resources. Such a strategy enables the aggregator to remain competitive.

Generation of energy from DERs are subject to fluctuations due to weather and time of day. This intermittency creates challenges to grid stability which requires enhanced operation and protection. Upgrading existing grids to accommodate bidirectional power flow and balancing supply and demand is vital for smooth integration and maintaining the power quality. Increasing level of penetration of DERs brings many new challenges such as balancing the supply and demand of energy resources, system protection, operation, and power quality for distribution systems. Coordinated DER flexibility can be utilized to help the system operator.

Many business and operating models or mechanisms promote deployment of DERs by incentivizing them with efficient coordination and utilization of resources. Hardly any existing methods or techniques addresses a MAMS environment, where there is a dynamic interaction between the multiple aggregators sharing the same pool with multiple subscribers. In the above scenario, it is needed that the MAMS environment is modelled to a non-linear single level optimization problem to optimize an amount of energy resource allocated to each aggregator and an amount of energy resource traded by each aggregator. Thus, this MAMS environment is an open research field.

SUMMARY

Embodiments of the present disclosure present technological improvements as solutions to one or more of the above-mentioned technical problems recognized by the inventors in conventional systems. For example, in one embodiment, a non-linear single level optimization model for estimating distributed energy resources (DER) responses in multi-aggregators multi-subscribers (MAMS) environment is provided. The system includes a memory storing instructions; one or more Input/Output (I/O) interfaces; and one or more hardware processors coupled to the memory via the one or more I/O interfaces, wherein the one or more hardware processors are configured by the instructions to receive a plurality of inputs from one or more aggregators comprising (i) a day ahead market price, (ii) a total available energy resource with each subscriber among one or more subscribers, (iii) one or more market risks, and (iv) a pricing strategy of each aggregator.

The system is also configured to obtain by a non-linear single level optimization model an energy resource allocation for the one or more aggregators based on the plurality of inputs.

Further the system, using the non-linear optimization model, derives a plurality of equilibrium optimal values between the energy resource allocation for each aggregator and an amount of energy resource traded by each aggregator in one or more energy markets; and estimates a plurality of distributed energy resources (DER) responses from the one or more subscribers based on the plurality of equilibrium optimal values. The plurality of equilibrium optimal values between the energy resource allocation for each aggregator and the amount of energy resource traded by each aggregator in the one or more energy markets are determined using the non-linear single level optimization model.

The system is also configured to construct the non-linear single level optimization model for the given multi-aggregators multi-subscribers environment by performing the following steps: building a subscriber layer using a first objective function and a first set of criteria to obtain the amount of energy resource allocated to each aggregator and an amount of energy resource self-consumed by each subscriber. The first set of criteria includes a cost of self-consumed energy resource by each subscriber and the first objective function maximizes revenue paid to the one or more subscribers by each aggregator.

Building an aggregator layer using a second objective function and a second set of criteria to obtain an amount of energy resource traded by each aggregator in one or more energy markets. The second set of criteria includes the amount of energy resource allocated to each aggregator and the amount of energy resource self-consumed by each subscriber from the subscriber layer, the one or more energy market risks and the day ahead market price. And the second objective function maximizes an energy profit of each aggregator in the one or more energy markets, wherein the energy profit of each aggregator in the one or more energy markets are computed based on maximum value function which is a difference between an expected revenue received by each aggregator and the one or more market risks, and the revenue paid to the one or more subscribers by each aggregator.

Then, obtaining a third set of criteria using the second set of criteria and a Karush-Kuhn-Tucker (KKT) equivalent of the first objective function and the first set of criteria. The system then constructs the non-linear single level optimization model by integrating the aggregator layer with the KKT equivalent of the subscriber layer, the second objective function and the third set of criteria.

In another aspect, a method for a non-linear single level optimization model for estimating distributed energy resources (DER) responses in multi-aggregators multi-subscribers (MAMS) environment is provided. The method includes: receiving via one or more hardware processor, a plurality of inputs from one or more aggregators comprising (i) a day ahead market price, (ii) a total available energy resource with each subscriber among one or more subscribers, (iii) one or more market risks, and (iv) a pricing strategy of each aggregator.

The method then includes obtaining via the one or more hardware processors, by a non-linear single level optimization model an energy resource allocation for the one or more aggregators based on the plurality of inputs and deriving via the one or more hardware processors, by the non-linear optimization model a plurality of equilibrium optimal values between the energy resource allocation for each aggregator and an amount of energy resource traded by each aggregator in one or more energy markets. The plurality of equilibrium optimal values between the energy resource allocation for each aggregator and the amount of energy resource traded by each aggregator in the one or more energy markets are determined using the non-linear single level optimization model.

Further, the method, via the one or more hardware processors, estimates a plurality of distributed energy resources (DER) responses using the non-linear optimization model from the one or more subscribers based on the plurality of equilibrium optimal values.

Further the method comprises the construction of the non-linear single level optimization model, comprises: building a subscriber layer using a first objective function and a first set of criteria to obtain the amount of energy resource allocated to each aggregator and an amount of energy resource self-consumed by each subscriber. The first set of criteria includes a cost of self-consumed energy resource by each subscriber and the first objective function maximizes revenue paid to the one or more subscribers by each aggregator.

The method then includes building an aggregator layer using a second objective function and a second set of criteria to obtain an amount of energy resource traded by each aggregator in one or more energy markets. The second set of criteria includes the amount of energy resource allocated to each aggregator and the amount of energy resource self-consumed by each subscriber from the subscriber layer, the one or more energy market risks and the day ahead market price and the second objective function maximizes an energy profit of each aggregator in the one or more energy markets. The energy profit of each aggregator in the one or more energy markets are computed based on maximum value function which is a difference between an expected revenue received by each aggregator and the one or more market risks, and the revenue paid to the one or more subscribers by each aggregator.

Further the method includes obtaining a third set of criteria using the second set of criteria and a Karush-Kuhn-Tucker (KKT) equivalent of the first objective function and the first set of criteria.

Finally, the method constructs the non-linear single level optimization model by integrating the aggregator layer with the KKT equivalent of the subscriber layer, the second objective function and the third set of criteria.

In yet another aspect, a non-transitory computer readable medium comprising one or more instructions, which when executed by one or more hardware processors causes a method for a non-linear single level optimization model for estimating distributed energy resources (DER) responses in multi-aggregators multi-subscribers (MAMS) environment is provided. The method includes: receiving, a plurality of inputs from one or more aggregators comprising (i) a day ahead market price, (ii) a total available energy resource with each subscriber among one or more subscribers, (iii) one or more market risks, and (iv) a pricing strategy of each aggregator. The method then includes obtaining by a non-linear single level optimization model an energy resource allocation for the one or more aggregators based on the plurality of inputs and deriving, by the non-linear optimization model a plurality of equilibrium optimal values between the energy resource allocation for each aggregator and an amount of energy resource traded by each aggregator in one or more energy markets. The plurality of equilibrium optimal values between the energy resource allocation for each aggregator and the amount of energy resource traded by each aggregator in the one or more energy markets are determined using the non-linear single level optimization model.

Further, the method estimates a plurality of distributed energy resources (DER) responses using the non-linear optimization model from the one or more subscribers based on the plurality of equilibrium optimal values.

Further the method comprises the construction of the non-linear single level optimization model, comprises: building a subscriber layer using a first objective function and a first set of criteria to obtain the amount of energy resource allocated to each aggregator and an amount of energy resource self-consumed by each subscriber. The first set of criteria includes a cost of self-consumed energy resource by each subscriber and the first objective function maximizes revenue paid to the one or more subscribers by each aggregator.

The method then includes building an aggregator layer using a second objective function and a second set of criteria to obtain an amount of energy resource traded by each aggregator in one or more energy markets. The second set of criteria includes the amount of energy resource allocated to each aggregator and the amount of energy resource self-consumed by each subscriber from the subscriber layer, the one or more energy market risks and the day ahead market price and the second objective function maximizes an energy profit of each aggregator in the one or more energy markets. The energy profit of each aggregator in the one or more energy markets are computed based on maximum value function which is a difference between an expected revenue received by each aggregator and the one or more market risks, and the revenue paid to the one or more subscribers by each aggregator.

Further the method includes obtaining a third set of criteria using the second set of criteria and a Karush-Kuhn-Tucker (KKT) equivalent of the first objective function and the first set of criteria.

Finally, the method constructs the non-linear single level optimization model by integrating the aggregator layer with the KKT equivalent of the subscriber layer, the second objective function and the third set of criteria.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 illustrates an exemplary system of a non-linear single level optimization model for estimating distributed energy resources (DER) responses in multi-aggregators multi-subscribers (MAMS) environment according to some embodiments of the present disclosure.

FIG.2 depicts a MAMS environment wherein the non-linear single level optimization model for estimating DER responses is implemented using the system of FIG.1, in accordance with some embodiments of the present disclosure.

FIG.3 illustrates a method for estimation of DERs responses in MAMS environment using the non-linear single level optimization model implemented using the system of FIG.1, in accordance with some embodiments of the present disclosure.

FIGS.4A through 4D illustrates DER responses in MAMS environment with two aggregators and three subscribers using the non-linear single level optimization model of FIG.1, in accordance with some embodiments of the present disclosure.

FIG.5 depicts performance of the non-linear single level optimization model in terms of number of iterations using the system of FIG.1, in accordance with some embodiments of the present disclosure.

FIG.6 illustrates sensitivity of the non-linear single level optimization model in terms of computation time using the system of FIG.1, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

**GLOSSARY:**

The term "Aggregator" refers to an independent or Distribution System Operator owned entity which aggregates/collects energy resources (such as electricity) from the distributed energy resources e.g. Solar PV, Wind power generators etc. The aggregator can trade the amount of energy resources collected in one or more energy markets or can provide flexibility services to a grid operator.

The term "Subscribers" refers to independent distributed energy resources (DERs) present in the energy resource distribution system. The DERs can subscribe with one or multiple aggregators to provide energy resources.

"MAMS environment": A MAMS environment refers to a system setup where multiple aggregators and multiple subscribers (DERs) are present and interact.

The term "Non-linear single level optimization" refers to an optimization formulation with an objective and a set of constraints where the objective and/or the constraints are non-linear equalities or inequalities.

The term "Pool" refers to a group of distributed energy resources (subscribers) present in a given geographical area and connected with a common energy distribution system

The term "Energy markets" is an online or offline trading platforms where buyers and sellers of energy resources trade for delivery of energy resources in a future time (same day or days ahead).

"Market risks": Price of energy resources in the one or more energy markets depends on the demand bids and supply offers. The prices are volatile and is termed as market risks.

In a multi-aggregator multi-subscriber (MAMS) environment, one or more aggregators compete with one another to secure maximum amount of energy resources from one or more DERs or subscribers to achieve highest possible profit through trading energy resources in one or more multi energy markets. Each aggregator employs strategic pricing models to attract DERs, where one or more DERs in response allocates total amount of energy resources available based on the most favorable pricing strategies offered. This competitive environment necessitates that aggregators optimize the amount of energy resource allocation from each subscribers and trading strategies to maximize both their own revenue and the financial returns for each DERs or subscribers. Consequently, each DERs maximizes revenue from the amount of energy resource allocated to each aggregator based on the pricing strategy offered by each aggregator and an amount of energy resources self-consumed by each subscriber. Thus, the MAMS environment requires dynamic interaction between each aggregator and each subscriber leveraging real-time data and advanced optimization algorithms to enhance market efficiency and profitability.

Existing methods do not have a framework for volume allocation optimization and price-volume optimization especially in multi-aggregator systems. Moreover, the price-volume optimization methods in an existing literature consider a system having multiple subscribers and single aggregator only and using these methods it is difficult to assess how multiple subscribers will behave with multiple aggregators. Further, in a multi-aggregator system, determining the prices offered by each for an amount of energy resource allocated by the subscribers is another challenge, since the prices offered are dependent on several factors such as day ahead market prices, market risks and the like.

In the MAMS environment, one or more aggregators compete to acquire an optimal amount of energy resources from one or more DERs, thereby maximizing each subscriber's profit. In this context, the one or more aggregators require a portfolio strategy, analogous to that of a fund manager, to extract maximum value from the amount of energy resources allocated for each aggregator. Such portfolio strategy is essential for ensuring that each aggregator can maximize their returns from the amount of energy resources allocated. The above methodology enables the one or more aggregators to maintain a competitive edge in the one or more energy market. Consequently, the one or more aggregators continuously optimize the associated portfolio strategies to remain effective and profitable.

To overcome the above-mentioned challenges and drawbacks of the existing methods, a non-linear single level optimization model with a game-theoretic framework is disclosed. In the game-theoretic framework multiple aggregators in the MAMS environment play a Stackelberg game with multiple subscribers where aggregators are leaders and subscribers are followers.

Embodiments herein provide a method and system of a non-linear single level optimization model for estimating DER responses in MAMS environment. The disclosed system may be alternatively referred to as a non-linear single level optimization model. The disclosed non-linear single level optimization model enables to estimate equilibrium optimal values between an amount of energy resources allocated for each aggregator among the one or more aggregators and the amount of energy resource traded by each aggregator in one or more energy markets.

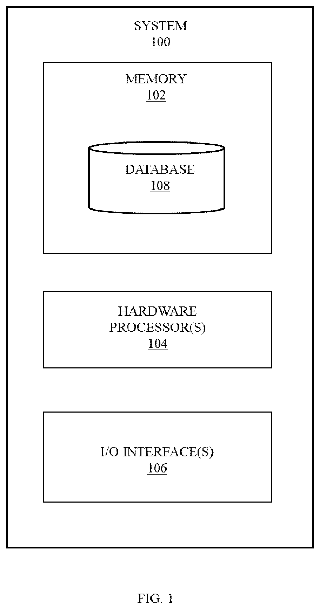

In the MAMS environment, each aggregator among the one or more aggregators competes with other aggregators obtain maximum amount of energy resources allocation from the one or more distributed energy resources (DERs) or subscribers. DER or subscriber determines the amount of energy resources to allocate the one or more aggregators by considering a plurality of prices offered by the one or more aggregators aiming to maximize their income. The one or more aggregators trade the amount of energy resources allocated to each of them in various energy markets to maximize returns, considering day-ahead market prices and a plurality of price risks. Prior to engaging in trading activities in one or more energy markets, aggregators must estimate the expected amount of energy resources available from the subscriber. The pricing strategy employed by an aggregator is a function of the total energy resources allocated to them by subscribers. Simultaneously, the quantity of energy resources allocated to an aggregator by a subscriber is dependent on the prices offered by the aggregators. This interdependency creates a feedback loop wherein each aggregator's pricing strategy and each subscriber's allocation decisions are mutually influential. Consequently, the system necessitates a dynamic and responsive method of pricing and allocation. This enables both aggregators and subscribers to optimize their respective financial outcomes within the competitive energy market framework. The disclosed system is further explained with the method as described in conjunction with FIG.1 to FIG.6 below.

Referring now to the drawings, and more particularly to FIG.1 through FIG.6, where similar reference characters denote corresponding features consistently throughout the figures, there are shown preferred embodiments, and these embodiments are described in the context of the following exemplary system and/or method.

FIG.1 is a functional block diagram of a system 100 for estimating distributed energy resources (DER) responses in multi-aggregators multi-subscribers (MAMS) environment using the non-linear single level optimization model, in accordance with some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 includes a non-linear single level optimization model. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure.

The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

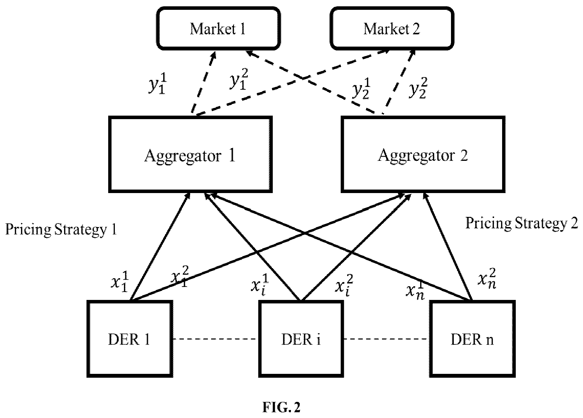

FIG.2 depicts a MAMS environment wherein the non-linear single level optimization model for estimating DER responses is implemented. More specifically FIG.2 depicts how the one or more aggregators (A) interact with the one or more DERs or subscribers (S) in the MAMS environment. This interaction is modelled as a non-linear single level optimization problem with an objective function and a set of criteria.

In another embodiment, a MAMS environment comprising of one or more subscriber's $S$ and one or more aggregators $A$ is considered for analyzing performance of the non-linear single level optimization model. Moreover, in order to make the analysis easier it is assumed that subscribers are allowed to select one or more aggregators from a pool of aggregators. Referred as each subscriber is able to select any number of aggregators or both. Further the amount of energy resources allocated for each aggregator is in a day ahead manner, i.e., the time duration for a single allocation be valid only for the next twenty-four hours. The energy trading has been done for each trading time slot of the next day. Both the aggregators and the subscribers share a common pool.

The one or more aggregators $A$ in the MAMS environment obtains some amount of energy resource from the one or more subscribers $S$. The one or more DERs are having a total available amount of energy resource, out of which a part of the energy resource is distributed among the one or more aggregators based on each of the aggregators pricing strategy.

Consider, each DER $i \in S$ allocates an amount of energy resource $x_{i,t}^{j}$ to the aggregator $j$ at time $t$. So, the DER response $x_{i,t}^{j}$ depends on the pricing strategy offered by the aggregator $j$. Each of the aggregators trades the total amount of energy resources allocated to them in one or more energy markets, $M$. Let $y_{m,t}^{j}$ be the amount of energy resources traded by aggregator $j \in A$ in a market $m \in M$ at time $t$. The per unit pricing function $P_{j,t}$ for each aggregator $j$ at time $t$ is defined as in Equation 1,

$$P_{j,t} = C_{j,t} + d_{j,t \cdot} \left( \sum_{i \in S} x_{i,t}^{j} \right) \qquad Equation\ 1$$

The amount of self-consumed energy resources by each of the aggregator $j$ at time $t$ is represented by the term $Z_{j,t}$. Further, $y_{j,t}$ is the vector of the amount of energy resources traded in the one or more energy markets. Thus, the amount of energy resources allocated versus the amount of energy resources traded in the one or more energy markets relation is given in Equation 2,

$$\mathbf{1}_{m \times 1} \mathbf{y}_{j,t} = \sum_{i \in S} x_{i,t}^{j} + Z_{j,t} \qquad Equation\ 2$$

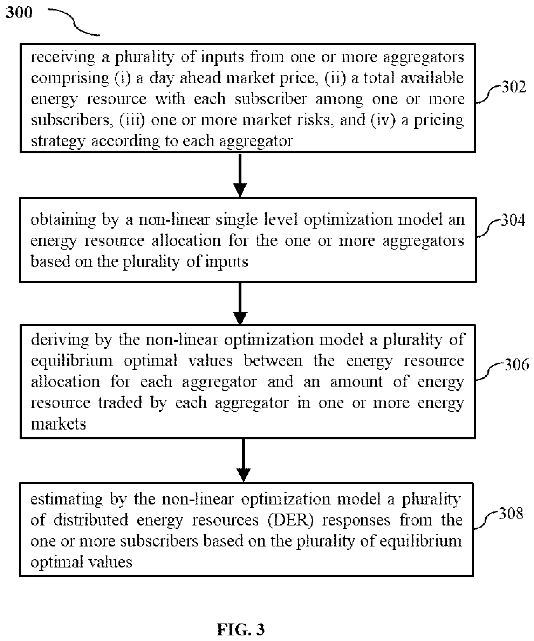

FIG.3 illustrates a method for estimation of DERs responses in MAMS environment using the non-linear single level optimization model implemented using the system of FIG. 1, in accordance with some embodiments of the present disclosure. In an embodiment, the system 100 comprises one or more data storage devices or the memory 104 operatively coupled to the one or more hardware processor(s) 102 and is configured to store instructions for execution of steps of the method 300 by the processor(s) or one or more hardware processors 102. The steps of the method 300 of the present disclosure will now be explained with reference to the components or blocks of the system 100 as depicted in FIG.1 and the steps of flow diagram as depicted in FIG.3. The method 300 may be described in the general context of computer executable instructions. Generally, computer executable instructions can include routines, programs, objects, components, structures, procedures, modules, functions, etc., that perform particular functions or implement particular abstract data types. The method 300 may also be practiced in a distributed computing environment where functions are performed by remote processing devices that are linked through a communication network. The order in which the method 300 is described is not intended to be construed as a limitation, and any number of the described method blocks can be combined in any order to implement the method 300, or an alternative method. Furthermore, the method 300 can be implemented in any suitable hardware, software, firmware, or combination thereof.

At step 302 of the method 300 the one or more hardware processors 104 are configured by the instruction to receive a plurality of inputs from the one or more aggregators. The plurality of inputs from each aggregator includes a day ahead market price, a total available energy resource with each subscriber among one or more subscribers, one or more market risks, and a pricing strategy according to each aggregator. The one or more market risks refers to the risks associated with the one or more energy market price variation. The pricing strategy by each aggregator is the price offered for energy resource allocated by the DERs.

Further at step 304 of the method 300 the one or more hardware processors 104 are configured by the instruction to obtain by the non-linear single level optimization model an amount of energy resource allocation for the one or more aggregators based on the plurality of inputs received at step 302. The energy resource allocation for each aggregator is a function of the aggregator's pricing strategy, the total available energy resource with each DER, and an amount of energy resource self-consumed by each DER.

The construction of the non-linear single level optimization model comprises of a sequence of steps: Initially, a subscriber layer is built using a first set of parameters to obtain the amount of energy resource allocated to each aggregator and an amount of energy resource self-consumed by each subscriber using a first objective function and a first set of criteria. The first set of parameters is a function of cost of self-consumed energy resource by each subscriber. Each aggregator trades the total amount of energy resources allocated to the one or more aggregators in order to maximize the profit. Similarly, the DER, *i* optimizes the amount of energy resources allocated to each aggregator *j*, $x_{i,t}^{j}$, $\forall j \in$ A, to maximize each of the subscribers' profit. Also, considering the amount of energy resource self-consumed by each subscriber (or do direct sale at a fixed price $C_{si}$) $x_{i,t}^{s}$ with a revenue equal to $Cs_i x_{i,t}^{s}$. For each subscriber i, a payoff maximization problem can be formulated as: Thus, the main object of the subscriber layer is to maximize the one or more subscriber's profit from the amount of energy resources allocated for each aggregator and the amount of energy self-consumed by each subscriber. The governing equations for the first objective function and the first set of criteria are given in Equation 3-5:

$$\max_{x_{i,t}^{j}, x_{i,t}^{s}} \left[ \sum_{j \in A} x_{i,t}^{j} \left( c_j + d_j x_t^{\bar{j}} \right) + Cs_i x_{i,t}^{s} \right] \qquad Equation\ 3$$

where the terms $c_j$ and $d_j x_t^{\bar{j}}$ are a cost of self-consumed energy resource by each subscriber and a cost of the amount of energy resource allocation for each aggregator respectively as in Equation 4 and 5:

$$\sum_{j \in A}^{x_{i,t}^{j}} x_{i,t}^{s} = PV_{i,t} \quad \forall\ t \qquad Equation\ 4$$

$$x_{i,t}^{j}, x_{i,t}^{s} \geq 0 \quad \forall\ t \qquad Equation\ 5$$

Once, the subscriber layer is built further the method constructs an aggregator layer using a second set of parameters and a second objective function to obtain the amount of energy resource traded by each aggregator in one or more energy markets. The second set of parameters includes the amount of energy resource allocated to each aggregator and the amount of energy resource self-consumed by each subscriber from the subscriber layer, the one or more energy market risks, and the day ahead market price. Each aggregator allocates a total amount of energy resource available in the one or more energy markets considering the risk associated with the one or more market prices referred as one or more

market risks, $\hat{P}_e$. Further, the one or more market risks is modeled as a variance-covariance matrix Q as in Markowitz Portfolio Theory. The amount of energy resource traded by each aggregator in one or more energy markets $y_{j,t}$ of an aggregator $j$ can be obtained from the second objective function and the second set of criteria governed by the Equations 6-8:

$$\max_{y_{j,t}} \left[ \hat{P}_e^T y_{j,t} - \Sigma_{i=1}^n x_{i,t}^j P_{j,t} - k y_{j,t}^T Q y_{j,t} \right] \qquad Equation\ 6$$

subject to

$$\mathbf{1}_{m\times1} y_{j,t} = \Sigma_{i\in\mathcal{S}} x_{i,t}^j + Z_{j,t} \qquad Equation\ 7$$

$$y_{j,t} \geq 0 \qquad Equation\ 8$$

Further, a third set of criteria is obtained using the second set of criteria and a Karush-Kuhn-Tucker (KKT) equivalent of the first objective function and the first set of criteria.

The KKT equivalent of the first objective function and the first set of criteria are governed by the following Equations 9-16:

$$\left( c_j + d_j \bar{x}^j \right) + d_j x_i^j + v_i - u_i^j = 0 \quad \forall i \qquad Equation\ 9$$

$$C_{S_j} + v_i - u_i^s = 0 \quad \forall i \qquad Equation\ 10$$

$$u_i^j x_i^j = 0 \quad \forall i \qquad Equation\ 11$$

$$u_i^s x_i^s = 0 \quad \forall i \qquad Equation\ 12$$

$$u_i^j \geq 0 \quad \forall i \qquad Equation\ 13$$

$$u_i^s \geq 0 \quad \forall i \qquad Equation\ 14$$

$$\sum_{j\in A}^{x_{i,t}^j} x_{i,t}^s = PV_{i,t} \quad \forall t \qquad Equation\ 15$$

$$x_{i,t}^j, x_{i,t}^s \geq 0 \quad \forall t \qquad Equation\ 16$$

The third set of criteria becomes constraints for the non-linear single level optimization model.

Finally, the non-linear single level optimization model is constructed by integrating the aggregator layer with the KKT equivalent of the subscriber layer as in equation 10, the second objective function as in equation 6 and the third set of criteria. The second objective function maximizes an energy profit of each aggregator in the one or more energy markets. The energy profit of each aggregator in energy markets are computed based on maximum value function which is a difference between an expected revenue received by each aggregator and the one or more market risks, and a revenue paid to the one or more subscribers by each aggregator.

Further at 306 of the method 300 the one or more hardware processors 104 are configured by the instruction to derive a plurality of equilibrium optimal values between the amount of energy resource allocated for each aggregator and the amount of energy resource traded by each aggregator in one or more energy markets using the non-linear single level optimization model.

At step 308 of the method 300, a plurality of distributed energy resources (DER) responses from the one or more subscribers based on the plurality of equilibrium optimal values are estimated using the non-linear single level optimization model by performing the sequence of steps elaborated as: Once the non-linear single level optimization model is constructed at step 304 of the method 300, the plurality of inputs is received by the non-linear single level optimization model. Then, the non-linear single level optimization model processes the plurality of inputs using an iterative Gauss-Seidel method to determine the plurality of equilibrium optimal values between the energy resource allocation for each aggregator and the amount of energy resource traded by each aggregator in the one or more energy markets. Further, the plurality of DER responses is estimated by the non-linear optimization model based on the plurality of equilibrium optimal values.

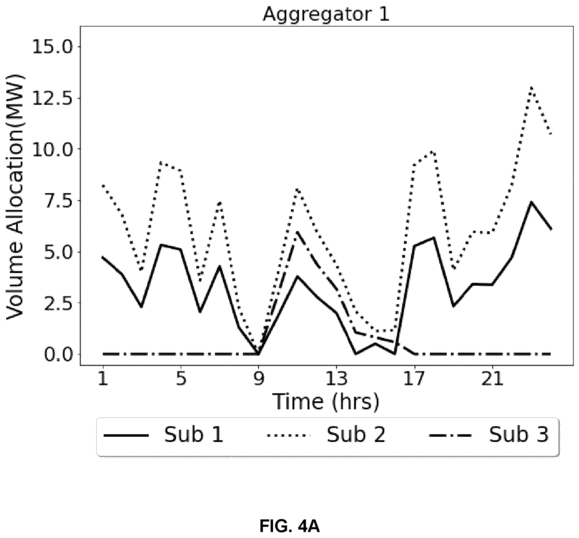

FIGS.4A through 4D illustrates DER responses in multi-aggregators multi-subscriber (MAMS) environment with two aggregators and three subscribers using the non-linear single level optimization model of FIG. 1, in accordance with some embodiments of the present disclosure.

Referring to FIGS. 4A through 4D illustrates the results obtained using the non-linear single level optimization model designed for the MAMS environment, wherein there are three subscribers and two aggregators. In the given MAMS environment two aggregators are competing to acquire the maximum amount of energy resources from the subscribers. The non-linear single level optimization model analyzes the competition for one aggregator among other aggregator and other subscribers based on the revenue obtained.

In order to obtain a higher amount of energy resource allocation from the subscribers, the aggregator have to offer a competitive price strategy for the subscribers. The subscribers, on the other hand can also consume some part of the total available or generated energy resources for self- consumption and some amount of the energy resources are allocated to the aggregators based on the competitive price strategy by the aggregator. The aggregators then, trades the amount of energy resources allocated by the subscribers in one or more energy markets.

The non-linear single level optimization model using the subscriber layer and the aggregator layer, analyzes the amount of energy resource allocation for each aggregator as well as the amount of energy resources traded by the aggregators in the one or more energy markets. An equilibrium optimal values between the energy resource allocation for each aggregator and the amount of energy resource traded by each aggregator in the one or more energy markets are obtained by the non-linear optimization single level model. Based on the equilibrium optimal values, the DERs responses are estimated by the non-linear single level optimization model.

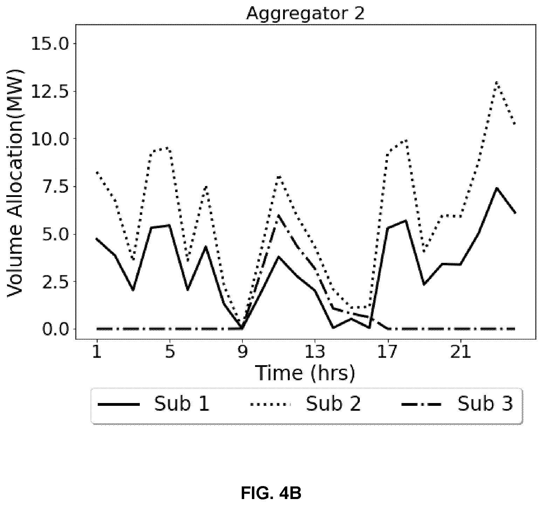

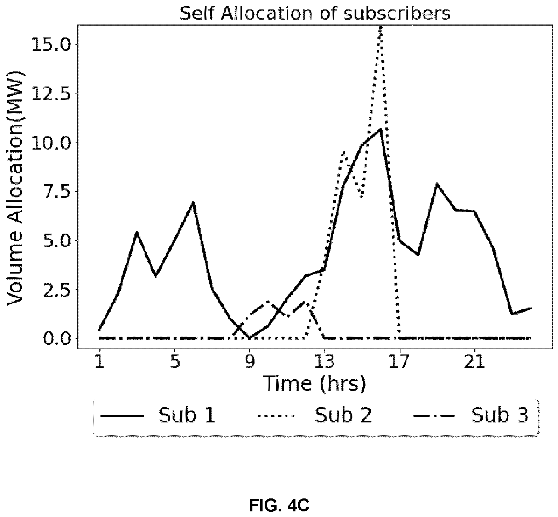

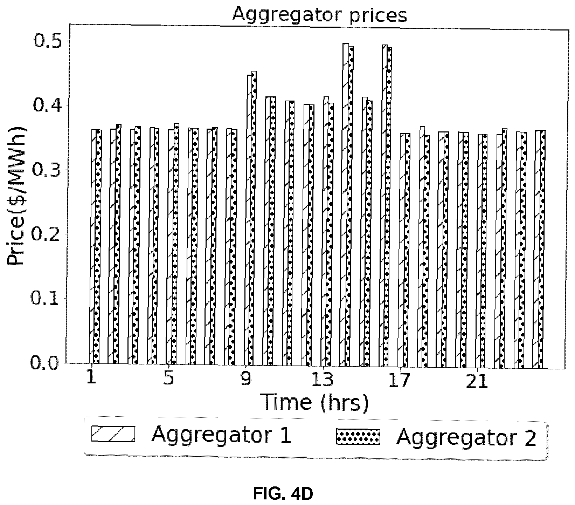

The results are estimated for a time duration of a day i.e. 24 hours. The results depicted in FIG.4A reflects the amount of energy resources allocated for aggregator 1 by the three subscribers for the time duration of twenty-four hours. Subsequently, FIG.4B depicts the amount of energy resources allocated for aggregator 2 by the three subscribers for the time duration of twenty-four hours. Now, referring to FIG.4C the amount of energy resource self-consumed by the one or more subscribers are illustrated. Further, in FIG.4D depicts the prices offered by the aggregators for the amount of energy resources allocated for each aggregator by the subscribers.

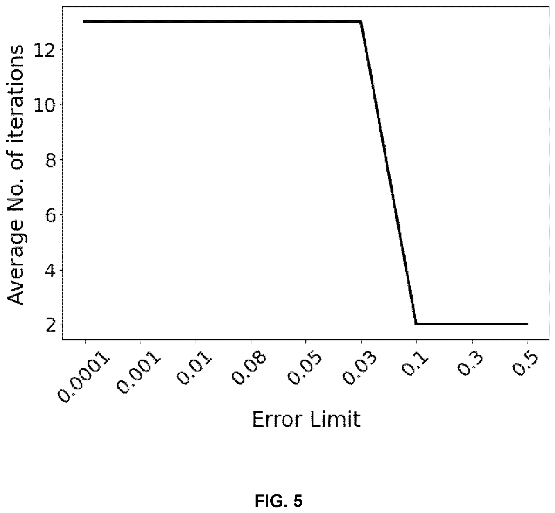

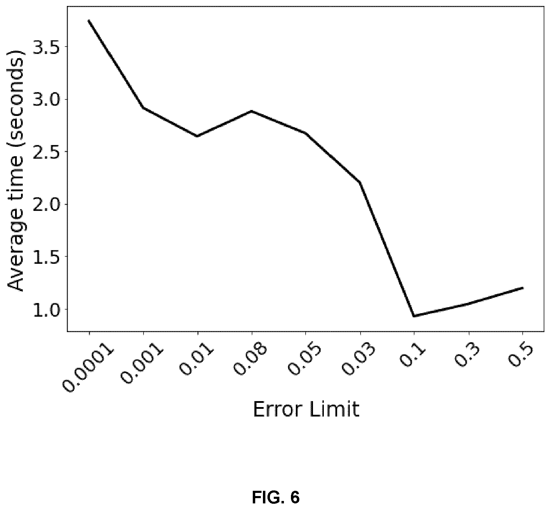

Now referring to FIG.5 and FIG.6, the performance of the non-linear single level optimization model with respect to third set of criteria is depicted.

FIG.5 depicts performance of the non-linear single level optimization model in terms of number of iterations using the system of FIG.1, in accordance with some embodiments of the present disclosure. Average number of iterations Vs error limit graph is shown in FIG. 5. The average number of iterations is the number of times the non-linear single level optimization model must run with the plurality of equilibrium optimal values, updated after each run till a converged solution is achieved, at an optimal error limit.

FIG.6 illustrates sensitivity of the non-linear single level optimization model in terms of computation time using the system of FIG.1, in accordance with some embodiments of the present disclosure.

Computation time Vs error limit graph is shown in FIG.6, wherein the computation time is the total time needed for the average number of iterations to achieve the converged solution at the optimal error limit.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

The embodiments of present disclosure herein address unresolved problem of estimation of Distributed Energy Resources (DER) responses in Multi-Aggregators Multi-Subscribers (MAMS) environment using a non-linear single level optimization. The embodiments thus provide a single level optimization model instead of existing bi-level frameworks which only works for single aggregator or single subscriber scenarios. The method provides construction of the non-linear single level optimization model that eliminates the need for depending on multiple models for analyzing the competition among multiple aggregators and subscribers. Moreover, the embodiments herein further provide utilization of the non-linear single level optimization model for generating optimal pricing strategy for multiple aggregators. The non-linear single level optimization model also generates optimal allocation strategy for multiple subscribers. From the optimal pricing strategy and optimal allocation strategy, the non-linear single level optimization model estimates DER responses in the MAMS environment.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein.

**Claims**

1. A processor implemented method (300) for estimating distributed energy resources (DER) responses in multi-aggregators multi-subscribers (MAMS) environment, the method comprising:

     receiving (302), via one or more hardware processor, a plurality of inputs from one or more aggregators comprising (i) a day ahead market price, (ii) a total available energy resource with each subscriber among one or more subscribers, (iii) one or more market risks, and (iv) a pricing strategy of each aggregator;
     obtaining (304), via the one or more hardware processors, by a non-linear single level optimization model an energy resource allocation for the one or more aggregators based on the plurality of inputs;
     deriving (306), via the one or more hardware processors, by the non-linear optimization model a plurality of equilibrium optimal values between the energy resource allocation for each aggregator and an amount of energy resource traded by each aggregator in one or more energy markets; and
     estimating (308), via the one or more hardware processors, by the non-linear optimization model a plurality of distributed energy resources (DER) responses from the one or more subscribers based on the plurality of equilibrium optimal values.

2. The processor implemented method as claimed in claim 1, wherein the non-linear single level optimization model is constructed by:

> building a subscriber layer using a first objective function and a first set of criteria to obtain the amount of energy resource allocated to each aggregator and an amount of energy resource self-consumed by each subscriber;
> building an aggregator layer using a second objective function and a second set of criteria to obtain an amount of energy resource traded by each aggregator in one or more energy markets;
> obtaining a third set of criteria using the second set of criteria and a Karush-Kuhn-Tucker (KKT) equivalent of the first objective function and the first set of criteria; and
> constructing the non-linear single level optimization model by integrating the aggregator layer with the KKT equivalent of the subscriber layer, the second objective function and the third set of criteria.

3. The processor implemented method as claimed in claim 2, wherein the first set of criteria includes a cost of self-consumed energy resource by each subscriber.

4. The processor implemented method as claimed in claim 2, wherein the second set of criteria includes the amount of energy resource allocated to each aggregator and the amount of energy resource self-consumed by each subscriber from the subscriber layer, the one or more energy market risks and the day ahead market price.

5. The processor implemented method as claimed in claim 2, wherein the first objective function maximizes revenue paid to the one or more subscribers by each aggregator, and wherein the second objective function maximizes an energy profit of each aggregator in the one or more energy markets.

6. The processor implemented method as claimed in claim 5, wherein the energy profit of each aggregator in the one or more energy markets are computed based on maximum value function which is a difference between an expected revenue received by each aggregator and the one or more market risks, and the revenue paid to the one or more subscribers by each aggregator.

7. The processor implemented method as claimed in claim 1, wherein the plurality of equilibrium optimal values between the energy resource allocation for each aggregator and the amount of energy resource traded by each aggregator in the one or more energy markets are determined using the non-linear single level optimization model.

8. A system (100), comprising:

> a memory (102) storing instructions;
> one or more communication interfaces (106); and
> one or more hardware processors (104) coupled to the memory (102) via the one or more communication interfaces (106), wherein the one or more hardware processors (104) are configured by the instructions to:
>
>> receive a plurality of inputs from one or more aggregators comprising (i) a day ahead market price, (ii) a total available energy resource with each subscriber among one or more subscribers, (iii) one or more market risks, and (iv) a pricing strategy of each aggregator;
>> obtain by a non-linear single level optimization model an energy resource allocation for the one or more aggregators based on the plurality of inputs;
>> derive by the non-linear optimization model a plurality of equilibrium optimal values between the energy resource allocation for each aggregator and an amount of energy resource traded by each aggregator in one or more energy markets; and
>> estimate by the non-linear optimization model a plurality of distributed energy resources (DER) responses from the one or more subscribers based on the plurality of equilibrium optimal values.

9. The system as claimed in claim 8, wherein the non-linear single level optimization model is constructed by:

> building a subscriber layer using a first objective function and a first set of criteria to obtain the amount of energy resource allocated to each aggregator and an amount of energy resource self-consumed by each subscriber;
> building an aggregator layer using a second objective function and a second set of criteria to obtain an amount of energy resource traded by each aggregator in one or more energy markets;

obtaining a third set of criteria using the second set of criteria and a Karush-Kuhn-Tucker (KKT) equivalent of the first objective function and the first set of criteria; and

constructing the non-linear single level optimization model by integrating the aggregator layer with the KKT equivalent of the subscriber layer, the second objective function and the third set of criteria.

10. The system as claimed in claim 9, wherein the first set of criteria includes a cost of self-consumed energy resource by each subscriber.

11. The system as claimed in claim 9, wherein the second set of criteria includes the amount of energy resource allocated to each aggregator and the amount of energy resource self-consumed by each subscriber from the subscriber layer, the one or more energy market risks and the day ahead market price.

12. The system as claimed in claim 9, wherein the first objective function maximizes revenue paid to the one or more subscribers by each aggregator, and wherein the second objective function maximizes an energy profit of each aggregator in the one or more energy markets.

13. The system as claimed in claim 12, wherein the energy profit of each aggregator in the one or more energy markets are computed based on maximum value function which is a difference between an expected revenue received by each aggregator and the one or more market risks, and the revenue paid to the one or more subscribers by each aggregator.

14. The system as claimed in claim 8, wherein the plurality of equilibrium optimal values between the energy resource allocation for each aggregator and the amount of energy resource traded by each aggregator in the one or more energy markets are determined using the non-linear single level optimization model.

15. One or more non-transitory machine-readable information storage mediums comprising one or more instructions which when executed by one or more hardware processors cause:

receiving a plurality of inputs from one or more aggregators comprising (i) a day ahead market price, (ii) a total available energy resource with each subscriber among one or more subscribers, (iii) one or more market risks, and (iv) a pricing strategy of each aggregator;

obtaining by a non-linear single level optimization model an energy resource allocation for the one or more aggregators based on the plurality of inputs;

deriving by the non-linear optimization model a plurality of equilibrium optimal values between the energy resource allocation for each aggregator and an amount of energy resource traded by each aggregator in one or more energy markets; and

estimating by the non-linear optimization model a plurality of distributed energy resources (DER) responses from the one or more subscribers based on the plurality of equilibrium optimal values.

SYSTEM
100

MEMORY
102

DATABASE
108

HARDWARE
PROCESSOR(S)
104

I/O INTERFACE(S)
106

FIG. 1

FIG. 2

300

receiving a plurality of inputs from one or more aggregators comprising (i) a day ahead market price, (ii) a total available energy resource with each subscriber among one or more subscribers, (iii) one or more market risks, and (iv) a pricing strategy according to each aggregator — 302

obtaining by a non-linear single level optimization model an energy resource allocation for the one or more aggregators based on the plurality of inputs — 304

deriving by the non-linear optimization model a plurality of equilibrium optimal values between the energy resource allocation for each aggregator and an amount of energy resource traded by each aggregator in one or more energy markets — 306

estimating by the non-linear optimization model a plurality of distributed energy resources (DER) responses from the one or more subscribers based on the plurality of equilibrium optimal values — 308

**FIG. 3**

FIG. 4A

**Aggregator 2**

**FIG. 4B**

FIG. 4C

FIG. 4D

FIG. 5

FIG. 6

# EUROPEAN SEARCH REPORT

Europäisches
Patentamt
European
Patent Office
Office européen
des brevets

**Application Number**

EP 25 19 1606

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EVANGELOPOULOS VASILEIOS A ET AL: "Heterogeneous aggregators competing in a local flexibility market for active distribution system management: A bi-level programming approach", INTERNATIONAL JOURNAL OF ELECTRICAL POWER & ENERGY SYSTEMS, JORDAN HILL, OXFORD, GB, vol. 136, 16 October 2021 (2021-10-16), XP086887909, ISSN: 0142-0615, DOI: 10.1016/J.IJEPES.2021.107639 [retrieved on 2021-10-16] * the whole document * | 1-15 | INV. G06Q30/0201 G06Q50/06 |
| A | CHENG XIAOYUAN ET AL: "Decentralized intelligent multi-party competitive aggregation framework for electricity prosumers", APPLIED ENERGY, ELSEVIER SCIENCE PUBLISHERS, GB, vol. 373, 14 July 2024 (2024-07-14), XP087589305, ISSN: 0306-2619, DOI: 10.1016/J.APENERGY.2024.123860 [retrieved on 2024-07-14] * the whole document * | 1-15 | |
| A | YANG MENGJIE ET AL: "Multi-Agent Dynamic Pricing and Energy Management Strategy for Distribution Networks Based on Bi-Layer Stackelberg Game", 2023 4TH INTERNATIONAL CONFERENCE ON ADVANCED ELECTRICAL AND ENERGY SYSTEMS (AEES), IEEE, 1 December 2023 (2023-12-01), pages 500-505, XP034574217, DOI: 10.1109/AEES59800.2023.10469589 [retrieved on 2024-03-22] * the whole document * | 1-15 | TECHNICAL FIELDS SEARCHED (IPC) G06Q |

The present search report has been drawn up for all claims

| Place of search | Date of completion of the search | Examiner |
|---|---|---|
| The Hague | 20 August 2025 | Bassanini, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421056696